# EUROPEAN PATENT APPLICATION

(11) **EP 4 782 880 A1**
(43) Date of publication of application: **29.07.2026**
(21) Application number: 24868375.7
(22) Date of filing: 20.09.2024
(51) Int. Cl.: G01S 7/497, G01S 17/89

(54) **CONTROL DEVICE, PROGRAM, AND LIDAR SYSTEM**

(30) Priority: 22.09.2023 JP 2023158263
(71) Applicant: Koito Manufacturing Co., Ltd., Shinagawa-ku, Tokyo 141-0001 (JP)
(72) Inventor: MATSUDA, Toshiya, Shizuoka-shi, Shizuoka 424-8764 (JP)
(74) Representative: Hoffmann Eitle
(86) International application number: PCT/JP2024/033761
(87) International publication number: WO 2025/063299

(57) **Abstract**

A control device (20) that processes point cloud data output from a LiDAR device (10), the control device (20) including: a partition unit (22) that partitions data indicating a space into a plurality of voxels B; an assignment unit (23) that assigns an initial value f(0) of a variable to each of the voxels B; and a variation unit (24), for each predetermined period, on the basis of point cloud data, increases the variable f(n) of the voxel B in which a predetermined number or more of the points r indicating that an object is detected for the first period or longer that is equal to or shorter than the predetermined period are located, by a predetermined rising width, and lowers the variable f(n) of the other voxels by a predetermined falling width; and an output unit (25) that outputs data in which a voxel B having a variable f(n) equal to or larger than the predetermined threshold t is divided from the other voxels B, after the variation of the variable f(n) in the variation unit (24) is repeated a predetermined number of times.

## Description

### Technical Field

The present invention relates to a control device, a program, and a LiDAR system.

### Background Art

A light detection and ranging (LiDAR) device capable of measuring a distance and a shape to a target object by detecting reflected light of irradiated light is known, and the following Patent Literature 1 discloses an object detection system using the LiDAR device.

In the object detection system described in the following Patent Literature 1, distance data to an object is acquired by the LiDAR device, a difference from background data stored in advance is calculated, and an existence position of the object is calculated.

[Patent Literature 1] JP 2009-58927 A

### Summary of Invention

### Objects to be Achieved by the Invention

As described above, in the object detection system of Patent Literature 1 described above, background data is stored in advance. This background data is obtained by measuring a monitoring area in an unmanned state with a LiDAR device. However, there is a concern that the background data cannot be acquired in a case where a moving body is located in the monitoring area in the unmanned state in acquiring the background data.

### Means for Achieving the Objects

Therefore, an object of the present invention is to provide a control device, a program, and a LiDAR system capable of dividing data available as background data from other data even in a case where the moving body is located in a monitoring area.

In order to achieve the above object, the present invention is a control device that processes point cloud data output from a LiDAR device, the control device including: a partition unit that partitions data indicating a space into a plurality of voxels; an assignment unit that assigns an initial value of a variable to each of the voxels; a variation unit that performs, for each predetermined period, on the basis of point cloud data input from the LiDAR device, one of a variation of raising by a predetermined rising width and a variation of lowering by a predetermined falling width with respect to the variable of the voxel in which a predetermined number or more of points are located indicating that an object is detected for a first period or longer that is equal to or shorter than the predetermined period, and performs the other of a variation of raising by a predetermined rising width and a variation of lowering by a predetermined falling width with respect to the variable of the voxel in which the number of points indicating that an object is detected for the first period or longer is less than the predetermined number; and an output unit that outputs data in which the voxel having the variable equal to or larger than a predetermined threshold is divided from the other voxels, after the variation of the variable in the variation unit is repeated a predetermined number of times.

In addition, the present invention is a program executed by a control device that processes point cloud data output from a LiDAR device, the program causing the control device to execute: a step of partitioning data indicating a space into a plurality of voxels; a step of assigning an initial value of a variable to each of the voxels; a step of performing, for each predetermined period, on the basis of point cloud data input from the LiDAR device, one of a variation of raising by a predetermined rising width and a variation of lowering by a predetermined falling width with respect to the variable of the voxel in which a predetermined number or more of points are located indicating that an object is detected for a first period or longer that is equal to or shorter than the predetermined period, and performing the other of a variation of raising by a predetermined rising width and a variation of lowering by a predetermined falling width with respect to the variable of the voxel in which the number of points indicating that an object is detected for the first period or longer is less than the predetermined number; and a step of outputting data in which the voxel having the variable equal to or larger than a predetermined threshold is divided from the other voxels, after the step of varying the variable is repeated a predetermined number of times.

In addition, the present invention provides a LiDAR system that includes a LiDAR device and a control device that receives point cloud data output from the LiDAR device, in which the control device includes: a partition unit that partitions data indicating a space into a plurality of voxels; an assignment unit that assigns an initial value of a variable to each of the voxels; a variation unit that performs, for each predetermined period, on the basis of the point cloud data input from the LiDAR device, one of a variation of raising by a predetermined rising width and a variation of lowering by a predetermined falling width with respect to the variable of the voxel in which a predetermined number or more of points are located indicating that an object is detected for a first period or longer that is equal to or shorter than the predetermined period, and the other of a variation of raising by a predetermined rising width and a variation of lowering by a predetermined falling width with respect to the variable of the voxel in which the number of points indicating that an object is detected for the first period or longer is less than the predetermined number; and an output unit that outputs data in which the voxel having the variable equal to or larger than a predetermined threshold is divided from the other voxels, after the variation of the variable in the variation unit is repeated a predetermined number of times.

According to the control device, the program, and the LiDAR system, the following first operation or second operation is performed. In the first operation, the variable increases for each predetermined period in the voxel in which the number of points at which the object is detected for the first period or longer is the predetermined number or larger, and the variable lowers for each predetermined period in the voxel in which the number of the points is less than the predetermined number. In addition, an object such as a wall to be detected does not move at a position serving as a background. Therefore, in the voxel indicating the region where the object such as the wall serving as the background is located, the variable continues to rise. In addition, in the voxel indicating the region in which the moving body is located, even if the variable increases during the temporary period in which the moving body is located, the variable lowers before the moving body is located in the region or after the moving body moves from the region. Therefore, in the voxel indicating the region that can be the background, the variable can become equal to or larger than the predetermined threshold after the variable is repeatedly changed a predetermined number of times, and in the voxel indicating the other region, the variable can become smaller than the predetermined threshold after the variation of the variable is repeated a predetermined number of times.

In addition, in the second operation, according to the control device, the program, and the LiDAR system, the variable lowers for each predetermined period in the voxel in which the number of points at which the object is detected for the first period or longer is the predetermined number or larger, and the variable increases for each predetermined period in the voxel in which the number of points is less than the predetermined number. In addition, in the voxel indicating the region where the object such as the wall serving as the background is located, the variable continues to lower. In addition, in the voxel indicating the region in which the moving body is located, even when the variable lowers during the temporary period in which the moving body is located, the variable increases before the moving body is located in the region or after the moving body moves from the region. Therefore, in the voxel indicating the region that can be the background, the variable can become smaller than the predetermined threshold after the variable is repeatedly changed a predetermined number of times, and in the voxel indicating the other region, the variable can become the predetermined threshold or larger after the variation of the variable is repeated a predetermined number of times.

Therefore, in both the first operation and the second operation, it is possible to divide the voxel that can be the background and the other voxels by outputting the data in which the voxel having the variable equal to or larger than the predetermined threshold can be divided from the other voxels. In this manner, according to the present invention, even in a case where the moving body is located in the monitoring area, data that can be used as background data can be divided from other data. Therefore, a background can be set in equipment that receives the data.

The initial value may be determined on the basis of the number of points indicating that an object is detected for a second period or longer that is equal to or shorter than the specific period, in a specific period, for each of the voxels, on the basis of the point cloud data. Alternatively, the initial value may be determined, for each of the voxels, on the basis of the point cloud data, on the basis of the number of points indicating that an object is detected for a second period or longer that is equal to or shorter than the specific period, in a specific period, and the duration of points.

In a case where the initial value is determined as described above, in the first operation, as the variable that is the initial value, the variable of the voxel indicating the region that can be the background can be set to a high value, and the variables of the other voxels can be set to a low value. In the second operation, as the variable that is the initial value, the variable of the voxel indicating the region that can be the background can be set to a low value, and the variables of the other voxels can be set to a high value. That is, the initial value of each of the voxels can be weighted. Therefore, the period during which the variable of the voxel indicating the region serving as the background is the predetermined threshold or larger can be shortened.

The specific period may have a length equal to the predetermined period. In this case, the second period may have a length equal to the first period.

In these cases, management of the period may be facilitated.

The initial value may have the same value in each of the voxels.

In this case, since the initial value can be set to a specific value, the processing of determining the initial value becomes easy, and the control can be simplified.

In a case where the initial value is the same value in each of the voxels, the initial value is preferably the predetermined threshold.

In this case, even if the number of times of variation of the variable is once, the variable can be equal to or larger than the predetermined threshold in the voxel indicating the region that can be the background, and the variable can be smaller than the predetermined threshold in the voxel indicating the region that is not the background. Therefore, it is possible to shorten a period until data in which the voxel having the variable equal to or larger than the predetermined threshold is divided from the other voxels is output from the output unit.

The predetermined number may be 1.

In this case, the voxel indicating the region that can be the background by the point indicating that the small object is detected can be divided from the other voxels.

The predetermined number may be 2 or larger.

In this case, when the noise enters a specific position, the possibility can be suppressed that the voxel indicating the region including the specific position can be the background.

At least one of the predetermined rising width and the predetermined falling width may have a constant value.

In this case, for example, the processing can be simplified as compared with a case where the rising width and the falling width change for each predetermined period.

In addition, at least one of the predetermined rising width and the predetermined falling width is preferably determined on the basis of the number of points indicating that an object is detected for the first period or longer, for each of the voxels, in the predetermined period. Alternatively, at least one of the predetermined rising width and the predetermined falling width is preferably determined on the basis of the number of points indicating that an object is detected for the first period or longer, for each of the voxels, in the predetermined period, and the duration of points.

When the rising width and the falling width are determined as described above, a variation difference of the variable can be increased between the variable of the voxel indicating the region that can be the background and the other voxels. Therefore, the voxel indicating the region that can be the background can be divided from the other voxels more appropriately.

In addition, preferably, the first period has a length equal to the predetermined period.

The object serving as the background does not move in principle. Therefore, a point at which the object is always detected continues to exist in the voxel. Therefore, a point temporarily detected in the predetermined period can be excluded as noise. Therefore, the voxel indicating the region that can be the background can be divided from the other voxels more precisely.

As described above, according to the present invention, it is possible to provide a control device, a program, and a LiDAR system capable of dividing data available as background data from other data even in a case where the moving body is located in a monitoring area.

### Brief Description of Drawings

[FIG. 1] FIG. 1 is a schematic diagram illustrating a LiDAR system according to an embodiment of the present invention.
[FIG. 2] FIG. 2 is a conceptual diagram illustrating a monitoring area.
[FIG. 3] FIG. 3 is a flowchart illustrating an operation of a control device.

### Description of Embodiments

Hereinafter, preferred embodiments of a control device, a program, and a LiDAR system according to the present invention will be described in detail with reference to the drawings. The embodiments exemplified below are intended to facilitate understanding of the present invention and are not intended to limit the present invention. The present invention can be modified and improved within the scope of the claims without departing from the gist thereof. In addition, in the present invention, constituent elements in the following exemplary embodiments may be appropriately combined. Note that, in the drawings referred to below, dimensions of each member may be changed for easy understanding. In addition, in the drawings, for the sake of clarity, only some of similar constituent elements are denoted by reference numerals, and some reference numerals may be omitted.

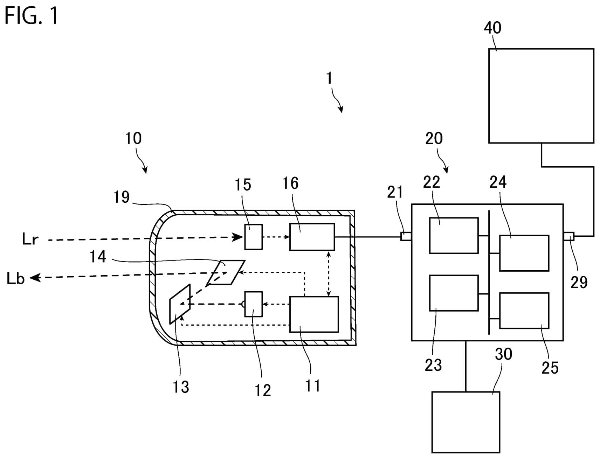

FIG. 1 is a schematic diagram illustrating a LiDAR system according to an embodiment of the present invention. A LiDAR system 1 of the present embodiment includes a LiDAR device 10, a control device 20, a memory 30, and a monitor 40 as a main configuration.

The LiDAR device 10 of the present embodiment detects an object in a monitoring area of the LiDAR device 10. With this detection, the LiDAR device 10 can detect an object serving as a background such as a wall or a bench, or a moving body such as a person or a vehicle. As the LiDAR device 10 of the present embodiment, for example, a raster scanning LiDAR device is used. The LiDAR device 10 of the present embodiment includes a cover 19, a driver circuit 11, a laser beam source 12, an H-direction scanning driving mirror 13, a V-direction scanning driving mirror 14, a light receiving element 15, and a point cloud data generator 16. Note that, in the example of FIG. 1, the LiDAR device 10 is a mechanical LiDAR device, but may be a phased array LiDAR device that does not include a drive unit.

The cover 19 has a housing space in which the driver circuit 11, the laser beam source 12, the H-direction scanning driving mirror 13, the V-direction scanning driving mirror 14, the light receiving element 15, and the point cloud data generator 16 are housed, and causes a laser beam Lb emitted from the laser beam source 12 and a reflected light Lr occurring when the laser beam Lb is reflected on the object in the monitoring area to pass therethrough.

The driver circuit 11 includes, for example, a plurality of logic circuits, and is electrically connected to the laser beam source 12, the H-direction scanning driving mirror 13, and the V-direction scanning driving mirror 14 to control them.

The laser beam source 12 emits a laser beam Lb having a predetermined wavelength. The laser beam Lb is, for example, near-infrared light having a wavelength of 905 nm or 1550 nm. The timing at which the laser beam source 12 emits the laser beam Lb is controlled by the driver circuit 11, and the laser beam Lb is emitted by a signal from the driver circuit 11. Note that the driver circuit 11 is electrically connected to the point cloud data generator 16, and outputs data including the timing of the laser beam Lb emitted from the laser beam source 12 to the point cloud data generator 16.

The H-direction scanning driving mirror 13 includes a mirror that reflects the laser beam Lb emitted from the laser beam source 12, and a drive unit, which is not illustrated, controlled by the driver circuit 11. When reflecting the laser beam Lb, the H-direction scanning driving mirror 13 reflects the laser beam Lb while changing a reflection angle in a horizontal direction by the drive unit. By changing the reflection angle of the H-direction scanning driving mirror 13, the LiDAR device 10 performs scanning in a horizontal direction.

The V-direction scanning driving mirror 14 includes a mirror that reflects the laser beam Lb reflected by the H-direction scanning driving mirror 13, and a drive unit, which is not illustrated, controlled by the driver circuit 11. When reflecting the laser beam Lb, the V-direction scanning driving mirror 14 reflects the laser beam Lb while changing a reflection angle in a vertical direction by the drive unit. Changing the reflection angle of the V-direction scanning driving mirror 14 changes the position of scanning in the horizontal direction performed by the LiDAR device 10 in the vertical direction. The laser beam reflected by the V-direction scanning driving mirror 14 passes through the cover 19 and is emitted to the front of the vehicle VE.

The H-direction scanning driving mirror 13 and the V-direction scanning driving mirror 14 include, for example, a polygon mirror and a galvano mirror. In addition, each of the H-direction scanning driving mirror 13 and the V-direction scanning driving mirror 14 may include an MEMS mirror. In addition, the H-direction scanning driving mirror 13 and the V-direction scanning driving mirror 14 may be integrated into one by a biaxial scanning type mirror, and the order of reflecting the laser beam Lb on the H-direction scanning driving mirror 13 and the V-direction scanning driving mirror 14 may be reversed.

The light receiving element 15 is an element that receives the reflected light Lr of the laser beam Lb reflected by the object in the monitoring area. The reflected light Lr received by the light receiving element 15 includes information regarding an object located in the monitoring area. The light receiving element 15 is electrically connected to the point cloud data generator 16, and the information is input to the point cloud data generator 16 as an electrical signal.

The point cloud data generator 16 generates point data for each reflection position based on the direction of the reflection position at which the laser beam Lb is reflected and the distance to the reflection position, on the basis of the data on the emission timing of the laser beam Lb input from the driver circuit 11, the information input from the light receiving element 15, and the data on the timing at which the information is input from the light receiving element 15. The point data includes coordinates of the point. Therefore, the point cloud data generator 16 generates point cloud data that is a collection of point data. The point cloud data generator 16 is electrically connected to the control device 20, and the point cloud data is input to the control device 20.

Next, the control device 20 will be described.

The control device 20 includes, for example, an integrated circuit such as a microcontroller, an integrated circuit (IC), a large-scale integrated circuit (LSI), or an application specific integrated circuit (ASIC), or a numerical control (NC) device. In addition, the control device 20 may use a machine learning device or may not use a machine learning device.

The control device 20 includes an input interface 21, a partition unit 22, an assignment unit 23, a variation unit 24, an output unit 25, and an output interface 29, which are electrically connected via bus lines, respectively.

The input interface 21 is electrically connected to the point cloud data generator 16. Therefore, the point cloud data is input from the input interface 21.

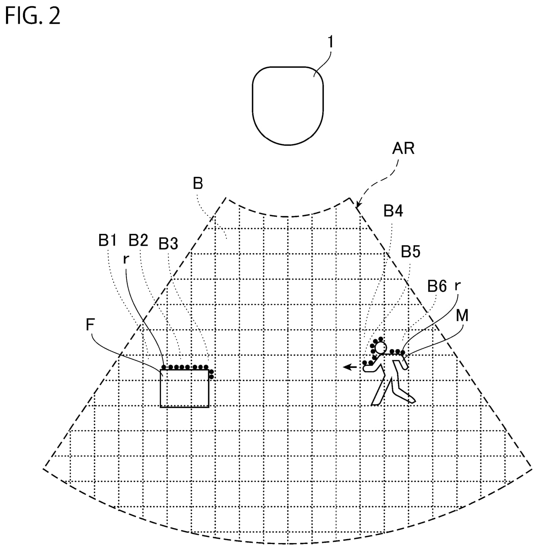

The partition unit 22 partitions data indicated by triaxial coordinates indicating a space into a plurality of voxels. This space is a space where the LiDAR system 1 monitors. FIG. 2 is a conceptual diagram illustrating a monitoring area. In FIG. 2, the voxel B is indicated by a broken line. Note that, in order to avoid complication of the drawing, FIG. 2 is illustrated as a plan view, but in practice, the space is partitioned into the voxels B at predetermined intervals in the x, y, and z directions. Although simply illustrated in FIG. 2, the size of the voxel B is smaller than the size illustrated in FIG. 2, and a monitoring area AR is partitioned into more voxels than into the voxels B illustrated in FIG. 2. Therefore, the coordinates of each voxel B are calculated as data, and the calculated data is sent to the variation unit 24 via the bus line.

Note that each voxel B has a size that can include a plurality of points r indicating a plurality of reflection points. That is, for example, in a case where there are reflection positions adjacent to each other in the H direction and data of a plurality of points r is formed by the reflected light Lr reflected at each reflection position, each point r can be located in one voxel B. In the example of FIG. 2, a fixed object F and the moving body M are positioned over the regions to be the voxels B1 to B3 and the voxels B4 to B6, respectively, and there are a plurality of reflection positions where the laser beam Lb is reflected by the fixed object F and the moving body M in the regions indicated by the voxels B2 and B3 and the voxels B4 to B6. Therefore, a plurality of points r for detecting an object are located in the voxels B2 and B3 and the voxels B4 to B6. However, depending on the position of the fixed object F, there is also a region having only one reflection point as in the region indicated by the voxel B1. In this case, the voxel B1 has only one point r.

The assignment unit 23 assigns an initial value f(0) of a variable f(n) to each voxel B. In the present embodiment, the initial value f(0) is the same value in each of the voxels B. By making the initial value f(0) uniform for each of the voxels B in this manner, the initial value f(0) can be set to a specific value, the processing of determining the initial value f(0) becomes easy, the control can be simplified, and the load on the assignment unit 23 can be reduced.

The variation unit 24 varies the variable f(n) for each predetermined period. In the case of the first variable variation immediately after the initial value f(0) is set, the initial value f(0) is varied. Specifically, the variation unit 24, on the basis of the point cloud data input from the LiDAR device 10, increases the variable f(n) of the voxel B in which a predetermined number or more of the points r indicating that an object is detected for the first period or longer that is equal to or shorter than the predetermined period are located by the predetermined rising width. Conversely, the variation unit 24 lowers the variable f(n) of the voxel B in which the number of the points r indicating that the object is detected for the first period or longer is smaller than the predetermined number by the predetermined falling width.

The predetermined number described above is, for example, 1. In this case, the voxel B indicating a region that can be the background when a small object is located in the region indicated by the voxel B and the number of points r at which the object is detected is one, and the other voxels B can be divided. Note that the predetermined number may be 2 or larger. In this case, when the noise enters a specific position, the possibility can be suppressed that the voxel B indicating the region including the specific position can be the background. In addition, the predetermined period is, for example, a period during which point cloud data for 12 frames is input from the LiDAR device 10. Note that the number of frames is not limited to 12 frames. For example, the number of frames may be a predetermined number of frames from 4 frames to 36 frames. In addition, the first period is, for example, a period during which point cloud data for 10 frames, which is less than 12 frames, is input from the LiDAR device 10. Note that the number of frames indicating the first period is not limited to 10 frames. For example, when the first period is the predetermined period or shorter, the number of frames may be a predetermined number of frames for 4 frames or more to 24 frames or less. In this case, in a case where a predetermined number or more of the points r indicating that the object is detected at the predetermined coordinates for 10 frames or more within the predetermined period are located, the variable f(n) of the voxel B in which the coordinates are located is increased by a predetermined rising width, and in a case where the number of the points r indicating that the object is detected at the predetermined coordinates for 10 frames or more within the predetermined period is less than the predetermined number, the variable f(n) of the voxel B in which the coordinates are located is lowered by a predetermined falling width.

The predetermined rising width and the predetermined falling width may be equal to each other. In addition, the predetermined rising width and the predetermined falling width are preferably constant values. In this case, for example, the processing can be simplified as compared with a case where the rising width and the falling width change for each predetermined period. In a case where the predetermined rising width and the predetermined falling width are constant values a and the variable after the variation is f(n+1), the variable is varied such that f(n+1) = f(n) + a or f(n+1) = f(n) - a. Note that, in a case where the variable after the variation is set in this manner, counter control is performed such that n + 1 becomes n after the variation. Details of the control will be described later.

After the variation of the variable f(n) in the variation unit 24 is repeated a predetermined number of times, the output unit 25 outputs data in which the voxel B in which the variable f(n) is equal to or larger than the predetermined threshold t is divided from the other voxels B. Therefore, the output unit 25 compares the predetermined threshold t with the variable f(n) of each voxel B, and for example, gives a predetermined flag to the voxel B in which the variable f(n) is equal to or larger than the threshold t, and gives another flag to the voxel B in which the variable f(n) is smaller than the threshold t. Processing of assigning a flag to only one of the voxel B in which the variable f(n) is equal to or larger than the threshold t and the voxel B in which the variable f(n) is smaller than the threshold t may be performed.

The predetermined number of times is not particularly limited as long as it is a value of 1 or larger, for example. When the predetermined number of times is 1, the output interval from the output unit 25 is shortened, and the data indicating the voxel B that can be the background can be updated in a short period of time according to a change in the situation. In addition, in a case where the predetermined number of times is a large value, the voxel B that can be the background can be specified more reliably. The large value is, for example, 50 or more and 200 or less, and may be 80 or more and 120 or less, or may be 100.

In addition, the threshold t is preferably, for example, a value equal to the initial value f(0). Since the initial value f(0) is equal to the threshold t, the variable f(n) can be equal to or larger than the threshold t in the voxel B indicating the region that can be the background even if the number of variations of the variable f(n) is once, and the variable f(n) can be smaller than the threshold t in the voxel B indicating the other regions. Therefore, it is possible to shorten a period until data in which a voxel B having a variable f(n) equal to or larger than the threshold t is divided from the other voxels B can be output from the output unit 25. However, the threshold t and the initial value f(0) may be different.

The control device 20 is electrically connected to the memory 30. In FIG. 1, a terminal between the memory 30 and the control device 20 is omitted. The memory 30 is configured to store information and be capable of reading the stored information. The memory 30 is, for example, a non-transitory recording medium, and is preferably a semiconductor recording medium such as a random access memory (RAM) or a read only memory (ROM), but may include a recording medium of any format such as an optical recording medium or a magnetic recording medium. Note that the "non-transitory" recording medium includes all computer-readable recording media except for a transient propagating signal (transitory, propagating signal), and does not exclude a volatile recording medium. Note that the memory 30 and the control device 20 may be provided in an integrated package. The memory 30 stores various programs for controlling some configurations of the control device 20 and generating information and data necessary for generating information. The control device 20 reads programs and information stored in the memory 30. In addition, the memory 30 stores information and the like in accordance with an instruction from the control device 20.

The monitor 40 shows, for example, a state of each voxel B shown by the control device 20. For example, the monitor 40 displays the voxel B in which the variable f(n) is larger than the threshold t while changing the color of the voxel B from the other voxels B. Note that the monitor 40 is not an essential configuration for the LiDAR system 1.

Next, the operation of the control device 20 will be described.

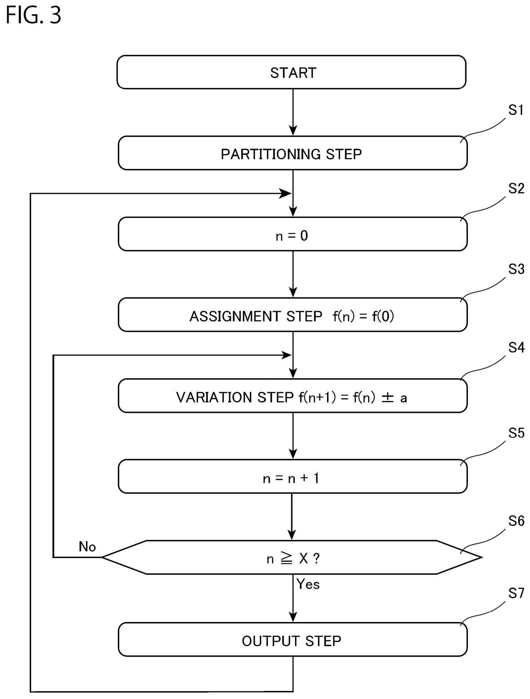

FIG. 3 is a flowchart illustrating an operation of a control device 20. A program for executing the operation of the flowchart is stored in the memory 30. Therefore, the control device 20 executes the flowchart of FIG. 3 by reading the program from the memory 30. As illustrated in FIG. 3, the operation of the control device 20 of the present embodiment includes steps S1 to S7.

### <Step S1>

This step is a partitioning step of partitioning data indicating a space into a plurality of voxels B. In this step, as illustrated in FIG. 2, the partition unit 22 of the control device 20 partitions data indicating a space indicated by triaxial coordinates into a plurality of voxels B. Therefore, as in the above description of the partition unit 22, by the partition unit 22, the coordinates of each voxel B are calculated as data, and the calculated data is sent to the variation unit 24 via the bus line.

### < Step S2>

This step is a step of setting n, which is the number of counters, to an initial value 0. Therefore, after this step, n = 0.

### <Step S3>

This step is an assignment step of assigning an initial value f(0) of the variable f(n) to each voxel B. Since the variable f(n) is n = 0 as described above, the variable f(n) after this step is f(0). In the present embodiment, the initial value f(0) is the same value in each voxel B as described above of the assignment unit 23, and is, for example, the same value as the threshold t.

### <Step S4>

This step is a variation step that varies the variable f(n) for each predetermined period. In this step, as in the above description in the variation unit 24, the variation unit 24 increases, on the basis of the point cloud data input from the LiDAR device 10, the variable f(n) of the voxel B in which a predetermined number or more of the points r indicating that an object is detected for the first period or longer that is equal to or shorter than the predetermined period are located by the predetermined rising width. Conversely, the variation unit 24 lowers the variable f(n) of the voxel B in which the number of the points r indicating that the object is detected for the first period or longer is smaller than the predetermined number by the predetermined falling width. The predetermined number, the rising width, and the falling width are, for example, as described above in the variation unit 24.

Note that each voxel B has a size that can include a plurality of points r indicating a plurality of reflection points. That is, for example, in a case where there are reflection positions adjacent to each other in the H direction and data of the points r is formed by the reflected light Lr reflected at each reflection position, each point r can be located in one voxel B. In the example of FIG. 2, a fixed object F and the moving body M are positioned over the region to be the voxels B1 to B3 and the region to be the voxels B4 to B6, respectively, and there are a plurality of reflection positions where the laser beam Lb is reflected in the regions indicated by the voxels B2 and B3 and the voxels B4 to B6. In the region indicated by the voxel B1, there is one reflection position at which the laser beam Lb is reflected. Therefore, the plurality of points r for detecting an object are located in the voxels B2 and B3 and the voxels B4 to B6, and the one point r for detecting the object is located in the voxel B1.

Since the voxels B1 to B3 are voxels indicating a region where the fixed object F is located, the point r indicating the reflection point exists in the voxels B1 to B3 for the first period or longer. Therefore, for example, in a case where the predetermined number is 1 as described above, the variation unit 24 increases the variable f(n) of the voxels B1 to B3 by the predetermined rising width. On the other hand, for example, in a case where the predetermined number is 2, the variation unit 24 increases the variable f(n) of the voxels B2 and B3 by the predetermined rising width, but lowers the variable f(n) of the voxel B1 in which the number of points r is 1 by the predetermined falling width.

Since the voxels B4 to B6 are voxels indicating a region where the moving body M is located, the point r indicating the reflection point exists in the voxels B4 to B6 for the first period or longer in some cases, and does not exist for the first period or longer in other cases. In any of the voxels B4 to B6, in a case where the point r exists for the first period or longer, when the number of points is equal to or larger than a predetermined number, the variation unit 24 increases the variable f(n) of the voxel B by the predetermined rising width. In addition, in any of the voxels B4 to B6, in a case where the number of the points r existing for the first period or longer is less than the predetermined number, the variation unit 24 lowers the variable f(n) of the voxel B by the predetermined falling width.

As in the above description in the variation unit 24, in a case where the predetermined rising width and the predetermined falling width have constant values a and the variable after the variation is f(n+1), the variable satisfies f(n+1) = f(n) + a or f(n+1) = f(n) - a. Therefore, the variable of the voxel B indicating the region where the object is located increases, and the variable of the voxel B indicating the region where the object is not located lowers.

### <Step S5>

This step is a step of advancing the counter. n = n + 1 means that 1 is added to the value of n before this step to obtain a new n. Therefore, n on the right side of the equation represents n before the present step, and n on the left side represents n after the present step. Since n = 0 after the first step S4, after this step after the first step S4, n = 1.

### <Step S6>

This step is a step for making the next step different depending on whether step S4 is performed a predetermined number of times. In this step, n and the number of times step S4 is performed are equal to each other. Therefore, when the predetermined number of times is X, the control device 20 returns to step S4 if n < X, and proceeds to step S7 if n ≥ X.

### <Step S7>

This step is an output step of outputting data in which a voxel B having a variable f(n) equal to or larger than the predetermined threshold t is divided from the other voxels B. In this step, the output unit 25 compares the predetermined threshold t with the variable f(n) of each voxel B. Thereafter, the output unit 25 generates data for assigning a predetermined flag to a voxel B having a variable f(n) equal to or larger than the threshold t. In addition, the output unit 25 generates data for assigning other flag to a voxel B having a variable f(n) that is smaller than the threshold t. Thereafter, the output unit 25 outputs the data of the voxel B to which the flag is assigned. In this manner, in the present embodiment, by the flag, data in which a voxel B having a variable f(n) equal to or larger than the predetermined threshold t is divided from the other voxels B is output. The output is output from the output interface 29 via the bus line.

As described above, the voxels B1 to B3 are voxels indicating a region where the fixed object F is located. Therefore, in the voxels B1 to B3, as described above, for the voxel B in which the variation unit 24 increases the variable f(n) by the predetermined rising width in step S4, the variable f(n) increases each time step S4 is repeated, and it is highly probable that the variable f(n) becomes equal to or larger than the threshold t in this step.

In addition, as described above, the voxels B4 to B6 are voxels indicating a region where the moving body M is located. Therefore, in the voxels B4 to B6, even when the variation unit 24 increases the variable f(n) by a predetermined rising width in step S4, the variation unit 24 may lower the variable f(n) by the predetermined falling width in the next step S4. Therefore, if the moving body M is temporarily stopped, the variable f(n) may become equal to or larger than the threshold t in this step, and if the moving body M is moving, the variable f(n) may become smaller than the threshold t in this step.

In the present embodiment, in this step, the output data is input to the monitor 40, and the voxel B to which a predetermined flag is assigned and the voxel B to which other flag is assigned are displayed on the monitor 40 in a visually distinguishable manner.

After this step, the control device 20 returns to step S2 and repeats steps S2 to S7 described above.

As described above, according to the control device, the program, and the LiDAR system, even when the moving body is located in the monitoring area in the present embodiment, data available as the background data can be divided from other data.

Next, a modification of the above embodiment will be described.

### (First modification)

In the above embodiment, the initial value f(0) assigned to each voxel B by the assignment unit 23 was the same value in each voxel B. However, the initial value f(0) may not be the same value in each voxel B. In the present modification, the assignment unit 23 determines the initial value f(0) for each voxel B in the specific period on the basis of the point cloud data, on the basis of the number of points r indicating that the object is detected for the second period or longer that is equal to or shorter than the specific period. That is, in determining the initial value f(0) in each voxel B, the assignment unit 23 counts the number of points r indicating that the object is detected in each voxel B for the second period or longer in the specific period in step S3. Then, the larger the number of points r, the larger the initial value f(0). The specific period is, for example, a period during which point cloud data for 12 frames is input from the LiDAR device 10. For example, the specific period has a length equal to the predetermined period in step S4 of the above embodiment. In this case, the second period is for 10 frames, which is less than 12 frames, for example. In a case where the specific period has a length equal to the predetermined period in step S4 of the above embodiment, the first period in step S4 and the second period in step S2 may have the same length. However, even when the specific period has a length equal to the predetermined period, the first period and the second period may have different lengths. In addition, the specific period may have the different length from the predetermined period.

### (Second modification)

As in the first modification, the present modification is an example in which the initial value f (0) is not the same value in each voxel B. In the present modification, the assignment unit 23 determines the initial value f(0), in a specific period, for each of the voxels B, on the basis of the point cloud data, on the basis of the number of points r indicating that the object is detected for the second period or longer that is equal to or shorter than the specific period, and the duration of the point r. That is, the initial value f(0) is determined for each of the voxels B on the basis of the occupancy of the point r. In determining the initial value f(0) in each voxel B, in step S3, the assignment unit 23 counts the number of points r indicating that the object is detected in each voxel B for the second period or longer during the specific period similarly in the first modification, and further counts the period in which each point r exists. This period is counted on the basis of the number of frames, for example. Then, the larger the number of points r and the longer the duration of points r, the larger the initial value f(0). The specific period and the second period in the present modification are similar to those in the first modification.

In a case where the initial value f(0) is determined as in the first and the second modifications, the initial value f(0) of the variable of the voxel B indicating the region that can be the background can be set to a high value, and the initial value f(0) of the variable of the other voxels B can be set to a low value, and the initial value of each of the voxels B can be weighted. Therefore, the period during which the variable of the voxel B indicating the region serving as the background is equal to or larger than the predetermined threshold t can be shortened. Note that, in the case of the first and the second modifications, preferably, the second period has a length equal to the specific period. The object serving as the background does not move in principle. Therefore, a point at which the object is always detected continues to exist in the voxel B. Therefore, since the second period has a length equal to the specific period, the point r temporarily detected in the specific period can be excluded as noise. Therefore, a clear difference can be made between the initial value f(0) of the voxel B indicating the region that can be the background and the initial value f(0) of the other voxels B.

### (Third modification)

In the above embodiment, the rising width and the falling width by which the variation unit 24 varies the variable f(n) of each voxel B are constant values a. However, the rising width and the falling width may be constant values different from each other. For example, the rising width may be a constant value a, and the falling width may be a constant value b larger than the constant value a. In this case, the variable f(n) of the voxel B indicating the region where the moving body is located increases, but after the moving body moves from the region, the variable f(n) of the voxel B can be lowered early. In addition, the rising width may be a constant value a, and the falling width may be a constant value b that is smaller than the constant value a.

### (Fourth modification)

The rising width and the falling width by which the variation unit 24 varies the variable f(n) of each voxel B may be different for each voxel B. In the present modification, at least one of the predetermined rising width and the predetermined falling width is determined on the basis of the number of points r indicating that an object is detected for the first period or longer, for each of the voxels B, in the predetermined period. That is, in determining the rising width or the falling width in each voxel B, the variation unit 24 counts the number of points r indicating that the object is detected in each voxel B for the first period or longer in the predetermined period in step S4. Then, in a case where the number of points r is a predetermined number or larger, the variation unit 24 sets the rising width to a larger value as the number of points r is larger. Then, in a case where the number of points r is less than a predetermined number, the variation unit 24 sets the falling width to a larger value as the number of points r is smaller. However, in a case where the variation unit 24 sets the falling width to a larger value as the number of points r is smaller, the predetermined number is a value of 2 or larger.

### (Fifth modification)

In the present modification, as in the fourth modification, the rising width and the falling width by which the variation unit 24 varies the variable f(n) of each voxel B are made different for each voxel B. In the present modification, at least one of the predetermined rising width and the predetermined falling width is determined on the basis of the number of points r indicating that an object is detected for the first period or longer, for each voxel B, in the predetermined period, and the duration of the point r. That is, the initial value f(0) is determined for each of the voxels B on the basis of the occupancy of the point r. In determining the rising width or the falling width in each of the voxels B, in step S4, the variation unit 24 counts the number of points r indicating that the object is detected, in each voxel B, for the first period or longer during the predetermined period similarly in the third modification, and further counts the period in which each point r exists. This period is counted on the basis of the number of frames, for example. Then, in a case where the number of points r is a predetermined number or larger, the variation unit 24 sets the rising width to a larger value as the number of points r is larger and the duration of the point r is longer. In addition, in a case where the number of points r is less than a predetermined number, the variation unit 24 sets the falling width to a larger value as the number of points r is smaller and the duration of the point r is shorter. In the present modification, in a case where the variation unit 24 sets the falling width to a larger value as the number of points r is smaller and the duration of the point r is shorter, the predetermined number is a value of 2 or larger.

In a case where the initial value f(0) is determined as in the first and the second modifications, or in a case where the rising width and the falling width are determined as in the fourth and the fifth modifications, a variation difference of the variable can be increased between the variable of the voxel B indicating the region that can be the background and the other voxels B. Therefore, the voxel B indicating the region that can be the background can be divided from the other voxels B more appropriately. Note that one of the upper width and the falling width may be determined as in the fourth and the fifth modifications, and the other may be a constant value a.

In addition, preferably, a first period has a length equal to a predetermined period. The object serving as the background does not move in principle. Therefore, a point at which the object is always detected continues to exist in the voxel B. Therefore, since the first period has a length equal to the predetermined period, the point r temporarily detected in the predetermined period can be excluded as noise. Therefore, the voxel B indicating the region that can be the background can be divided from the other voxels B more precisely.

As described above, one aspect of the present invention according to the above embodiment and modification is a control device 20 that processes point cloud data output from a LiDAR device 10, the control device 20 including: a partition unit 22 that partitions data indicating a space into a plurality of voxels B; an assignment unit 23 that assigns an initial value f(0) of a variable to each of the voxels B; a variation unit 24 that varies, for each predetermined period, on the basis of point cloud data input from the LiDAR device 10, the variable f(n) by increasing the variable f(n) of the voxel B in which a predetermined number or more of the points r indicating that an object is detected for the first period or longer that is equal to or shorter than the predetermined period are located by the predetermined rising width, and lowering the variable f(n) of the voxel B in which the number of the points r indicating that the object is detected for the first period or longer is smaller than the predetermined number by the predetermined falling width; and an output unit 25 that outputs data in which a voxel B having a variable f(n) equal to or larger than the predetermined threshold t is divided from the other voxels B, after the variation of the variable f(n) in the variation unit 24 is repeated a predetermined number of times.

In addition, another aspect of the present invention according to the above embodiment and the above modification is a program executed by the control device 20 that processes point cloud data output from the LiDAR device 10, the program causing the control device 20 to execute: a step of partitioning data indicating a space into a plurality of voxels B; a step of assigning an initial value f(0) of a variable f(n) to each of the voxels B; and a step of varying, for each predetermined period, on the basis of the point cloud data input from the LiDAR device 10, the variable f(n) by increasing the variable f(n) of the voxel B in which a predetermined number or more of points r indicating that an object is detected for a first period or longer that is equal to or shorter than a predetermined period are located by a predetermined rising width, and lowering the variable f(n) of the voxel B in which the number of points r indicating that an object is detected for the first period or longer is less than the predetermined number by a predetermined falling width; and a step of outputting data in which a voxel B having a variable f(n) equal to or larger than the predetermined threshold t is divided from the other voxels B, after the step of varying the variable f(n) is repeated a predetermined number of times.

In addition, still another aspect of the present invention according to the above embodiment and the above modification is a LiDAR system 1 including a LiDAR device 10 and a control device 20 to which point cloud data from the LiDAR device 10 is input, in which the control device 20 includes: a partition unit 22 that partitions data indicating a space into a plurality of voxels B; an assignment unit 23 that assigns an initial value f(0) of a variable to each of the voxels B; a variation unit 24 that varies, for each predetermined period, on the basis of the point cloud data input from the LiDAR device 10, the variable f(n) by increasing the variable f(n) of a voxel B in which a predetermined number or more of points r indicating that an object is detected for a first period or longer that is equal to or shorter than the predetermined period are located by a predetermined rising width, and lowering the variable f(n) of a voxel B in which the number of the points r indicating that the object is detected for the first period or longer is smaller than the predetermined number by the predetermined falling width; and an output unit 25 that outputs data in which voxel B having a variable f(n) equal to or larger than the predetermined threshold t is divided from the other voxels B, after the variation of the variable f(n) in the variation unit 24 is repeated a predetermined number of times.

According to the control device 20, the program, and the LiDAR system 1 of these aspects, the variable f(n) increases for each predetermined period in the voxel B in which the number of points r at which the object is detected for the first period or longer is the predetermined number or larger, and the variable f(n) lowers for each predetermined period in the voxel B in which the number of points r is less than the predetermined number. An object such as a wall to be detected does not move at a position serving as a background. Therefore, in the voxel B indicating the region where the object such as the wall serving as the background is located, the variable f(n) continues to rise. In addition, in the voxel B indicating the region in which the moving body is located, even if the variable f(n) increases during the temporary period in which the moving body is located, the variable f(n) lowers before the moving body is located in the region or after the moving body moves from the region. Therefore, in the voxel B indicating the region that can be the background, the variable f(n) can become equal to or larger than the predetermined threshold t after the variation of the variable f(n) is repeated a predetermined number of times, and in the voxel B indicating the other region, the variable f(n) can become smaller than the predetermined threshold t after the variation of the variable f(n) is repeated a predetermined number of times. Therefore, it is possible to divide the voxel B that can be the background and the other voxels B by outputting the data in which the voxel B having the variable f(n) equal to or larger than the predetermined threshold t is divided from the other voxels B. In this manner, according to the present invention, even in a case where the moving body is located in the monitoring area, data that can be used as background data can be divided from other data. Therefore, a background can be set in equipment that receives the data.

Here, a further modification of the above invention will be described.

### (Sixth modification)

In the above embodiment and the above modification, the variation unit 24 varies, for each predetermined period, on the basis of point cloud data input from the LiDAR device 10, the variable by increasing the variable f(n) of the voxel B in which a predetermined number or more of the points r indicating that an object is detected for the first period or longer that is equal to or shorter than the predetermined period are located by the predetermined rising width, and lowering the variable f(n) of the voxel B in which the number of the points r indicating that the object is detected for the first period or longer is smaller than the predetermined number by the predetermined falling width. However, the variation unit 24 may vary, for each predetermined period, on the basis of point cloud data input from the LiDAR device 10, the variable by lowering the variable f(n) of the voxel B in which the predetermined number or more of points r indicating that the object is detected for the first period or longer that is equal to or shorter than the predetermined period are located by the predetermined falling width and increasing the variable f(n) of the voxel B in which the number of points r indicating that the object is detected for the first period or longer is smaller than the predetermined number by the predetermined rising width.

In this case, as in the above embodiment, in a case where the predetermined rising width and the predetermined falling width are constant values a, when the variable after step S4 is f(n+1), f(n+1) = f(n)-a is obtained in the voxel B in which the predetermined number or more of points r indicating that the object is detected for the first period or longer are located, and f(n+1) = f(n) + a is obtained in the voxel B in which the number of points r indicating that the object is detected for the first period or longer is less than the predetermined number. Therefore, the variable of the voxel B indicating the region where the object is located lowers, and the variable of the voxel B indicating the region where the object is not located increases.

As described above, step S7 is an outputting step of outputting data in which the voxel B having the variable f(n) equal to or larger than the predetermined threshold t is divided from the other voxels B. Therefore, in the case of the present modification, in step S7, the voxel B to which another flag is assigned may be the voxel B that can be the background, and the voxel B to which the predetermined flag is assigned may be the other voxels B.

In addition, in the case of the present modification, the first modification is as follows. As described above, in the first modification, the assignment unit 23 determines the initial value f(0) for each voxel B in the specific period on the basis of the point cloud data, on the basis of the number of points r indicating that the object is detected for the second period or longer that is equal to or shorter than the specific period. In a case of the first modification to which the present modification is applied, this means that the assignment unit 23 sets the initial value f(0) to a smaller value as the number of points r is larger.

In addition, in the case of the present modification, the second modification is as follows. In the present modification, in the second modification, the assignment unit 23 determines the initial value f(0) for each voxel B in the specific period on the basis of the point cloud data, on the basis of the number of points indicating that the object is detected for the second period or longer that is equal to or shorter than the specific period, and the duration of points. In a case of the second modification to which the present modification is applied, this means that the assignment unit 23 sets the initial value f(0) to a smaller value as the number of points r is larger and the duration of points r is longer.

In addition, in the case of the present modification, the fourth modification is as follows. In the present modification, in the fourth modification, at least one of the predetermined rising width and the predetermined falling width is determined on the basis of the number of points r indicating that an object is detected for the first period or longer, for each voxel B, in the predetermined period. In the case of the fourth modification to which the present modification is applied, this means that the variation unit 24 sets the falling width to a larger value as the number of points r is larger when the number of points r is equal to or larger than a predetermined number, and sets the rising width to a larger value as the number of points r is smaller when the number of points r is smaller than the predetermined number.

In addition, in the case of the present modification, the fifth modification is as follows. In the fifth modification, at least one of the predetermined rising width and the predetermined falling width is determined, for each voxel B, in the predetermined period, on the basis of the number of points r indicating that an object is detected for the first period or longer, and the duration of the point r. This means that the variation unit 24 sets the falling width to a larger value as the number of points r is larger and the duration of the point r is longer in a case where the number of points r is equal to or larger than the predetermined number, and sets the rising width to a larger value as the number of points r is smaller and the duration of the point r is shorter in a case where the number of points r is smaller than the predetermined number.

As described above, one aspect of the present invention according to the sixth modification is a control device 20 that processes point cloud data output from a LiDAR device 10, the control device including: a partition unit 22 that partitions data indicating a space into a plurality of voxels B; an assignment unit 23 that assigns an initial value f(0) of a variable to each of the voxels B; and a variation unit 24 that varies, for each predetermined period, on the basis of point cloud data input from the LiDAR device 10, the variable f(n) by lowering the variable f(n) of the voxel B in which a predetermined number or more of the points r indicating that an object is detected for the first period or longer that is equal to or shorter than the predetermined period are located by the predetermined falling width, and increasing the variable f(n) of the voxel B in which the number of the points r indicating that the object is detected for the first period or longer is less than the predetermined number by the predetermined rising width; and an output unit 25 that outputs data in which voxel B having a variable f(n) equal to or larger than the predetermined threshold t is divided from the other voxels B, after the variation of the variable f(n) in the variation unit 24 is repeated a predetermined number of times.

In addition, another aspect of the present invention according to the sixth modification is a program executed by the control device 20 that processes point cloud data output from the LiDAR device 10, the program causing the control device 20 to execute: a step of partitioning data indicating a space into a plurality of voxels B; a step of assigning an initial value f(0) of a variable f(n) to each of the voxels B; and a step of varying the variable f(n), for each predetermined period, on the basis of the point cloud data input from the LiDAR device 10, by lowering the variable f(n) of the voxel B in which a predetermined number or more of points r indicating that an object is detected for a first period or longer that is equal to or shorter than a predetermined period are located by a predetermined falling width and increasing the variable f(n) of the voxel B in which the number of points r indicating that an object is detected for the first period or longer is less than the predetermined number by a predetermined rising width; and a step of outputting data in which the voxel B having the variable f(n) equal to or larger than the predetermined threshold t is divided from the other voxels B, after the step of varying the variable f(n) is repeated a predetermined number of times.

In addition, still another aspect of the present invention according to the sixth modification is a LiDAR system 1 including a LiDAR device 10 and a control device 20 to which point cloud data from the LiDAR device 10 is input, in which the control device 20 includes: a partition unit 22 that partitions data indicating a space into a plurality of voxels B; an assignment unit 23 that assigns an initial value f(0) of a variable to each of the voxels B; a variation unit 24 that varies, for each predetermined period, on the basis of the point cloud data input from the LiDAR device 10, the variable f(n) by lowering the variable f(n) of the voxel B in which a predetermined number or more of points r indicating that an object is detected for the first period or longer that is equal to or shorter than the predetermined period are located by a predetermined falling width, and increasing the variable f(n) of the voxel in which the number of the points r indicating that the object is detected for the first period or longer is smaller than the predetermined number by the predetermined rising width; and an output unit 25 that outputs data in which the voxel B having a variable f(n) equal to or larger than the predetermined threshold t is divided from the other voxels B, after the variation of the variable f(n) in the variation unit 24 is repeated a predetermined number of times.

In view of the above, one aspect of the present invention is as follows. That is, one aspect of the present invention is the control device 20 that processes point cloud data output from the LiDAR device 10, the control device including: the partition unit 22 that partitions data indicating a space into a plurality of voxels B; the assignment unit 23 that assigns an initial value f(0) of a variable to each of the voxels B; a variation unit 24 that performs, for each predetermined period, on the basis of point cloud data input from the LiDAR device 10, one of a variation of raising by a predetermined rising width and a variation of lowering by a predetermined falling width with respect to the variable f(n) of the voxel B in which a predetermined number or more of the points r indicating that an object is detected for the first period or longer that is equal to or shorter than the predetermined period are located, and the other of a variation of raising by a predetermined rising width and a variation of lowering by a predetermined falling width with respect to the variable f(n) of the voxel B in which the number of the points r indicating that the object is detected for the first period or longer is smaller than the predetermined number; and an output unit 25 that outputs data in which the voxel B having a variable f(n) equal to or larger than the predetermined threshold t is divided from the other voxels B, after the variation of the variable f(n) in the variation unit 24 is repeated a predetermined number of times.

In addition, another aspect of the present invention according to the above embodiment is a program executed by the control device 20 that processes point cloud data output from the LiDAR device 10, the program causing the control device 20 to execute: a step of partitioning data indicating a space into a plurality of voxels B; a step of assigning an initial value f(0) of a variable f(n) to each of the voxels B; and a step of performing, for each predetermined period, on the basis of the point cloud data input from the LiDAR device 10, one of a variation of raising by a predetermined rising width and a variation of lowering by a predetermined falling width with respect to the variable f(n) of the voxel B in which a predetermined number or more of points r indicating that an object is detected for a first period or more that is equal to or shorter than a predetermined period are located, and the other of a variation of raising by a predetermined rising width and a variation of lowering by a predetermined falling width with respect to the variable f(n) of the voxel B in which the number of points r indicating that an object is detected for the first period or longer is less than the predetermined number; and a step of outputting data in which the voxel B having the variable f(n) equal to or larger than the predetermined threshold t is divided from the other voxels B, after the step of varying the variable f(n) is repeated a predetermined number of times.

That is, one aspect of the present invention is the LiDAR system 1 including the LiDAR device 10 and the control device 20 to which point cloud data from the LiDAR device 10 is input, the control device 20 including: the partition unit 22 that partitions data indicating a space into a plurality of voxels B; the assignment unit 23 that assigns an initial value f(0) of a variable to each of the voxels B; the variation unit 24 that performs, for each predetermined period, on the basis of point cloud data input from the LiDAR device 10, one of a variation of raising by a predetermined rising width and a variation of lowering by a predetermined falling width with respect to the variable f(n) of the voxel B in which a predetermined number or more of the points r indicating that an object is detected for the first period or longer that is equal to or shorter than the predetermined period are located, and the other of a variation of raising by a predetermined rising width and a variation of lowering by a predetermined falling width with respect to the variable f(n) of the voxel B in which the number of the points r indicating that the object is detected for the first period or longer is smaller than the predetermined number; and the output unit 25 that outputs data in which the voxel B having a variable f(n) equal to or larger than the predetermined threshold t is divided from the other voxels B, after the variation of the variable f(n) in the variation unit 24 is repeated a predetermined number of times.

According to the present invention, even in a case where the moving body is located in a monitoring area, it is possible to provide a control device, a program, and a LiDAR system capable of dividing data available as background data from other data, which are available in fields of monitoring systems indoor and outdoor.

## Claims

1. A control device that processes point cloud data output from a LiDAR device, the control device comprising:
a partition unit that partitions data indicating a space into a plurality of voxels;
an assignment unit that assigns an initial value of a variable to each of the voxels;
a variation unit that performs, for each predetermined period, on a basis of point cloud data input from the LiDAR device, one of a variation of raising by a predetermined rising width and a variation of lowering by a predetermined falling width with respect to the variable of the voxel in which a predetermined number or more of points are located indicating that an object is detected for a first period or longer that is equal to or shorter than the predetermined period and performs other of a variation of raising by the predetermined rising width and a variation of lowering by the predetermined falling width with respect to the variable of the voxel in which the number of points indicating that an object is detected for the first period or longer is less than the predetermined number; and
an output unit that outputs data in which the voxel having the variable equal to or larger than a predetermined threshold is divided from the other voxels, after the variation of the variable in the variation unit is repeated a predetermined number of times.

2. The control device according to claim 1, wherein the initial value is determined on a basis of a number of points indicating that an object is detected for a second period or longer that is equal to or shorter than the specific period, in a specific period, for each of the voxels, on the basis of the point cloud data.

3. The control device according to claim 1, wherein
the initial value is determined, in a specific period, for each of the voxels, on the basis of the point cloud data, on the basis of a number of points indicating that an object is detected for a second period or longer that is equal to or shorter than the specific period, and the duration of points.

4. The control device according to claim 2 or 3, wherein the specific period has a length equal to the predetermined period.

5. The control device according to claim 4, wherein
the second period has a length equal to the first period.

6. The control device according to claim 1, wherein
the initial value has a same value in each of the voxels.

7. The control device according to claim 6, wherein
the initial value is the predetermined threshold.

8. The control device according to claim 1, wherein
the predetermined number is 1.

9. The control device according to claim 1, wherein
the predetermined number is 2 or larger.

10. The control device according to claim 1, wherein
at least one of the predetermined rising width and the predetermined falling width has a constant value.

11. The control device according to claim 1, wherein
at least one of the predetermined rising width and the predetermined falling width is determined, for each of the voxels, in the predetermined period, on the basis of the number of points indicating that an object is detected for the first period or longer.

12. The control device according to claim 1, wherein
at least one of the predetermined rising width and the predetermined falling width is determined, for each of the voxels, in the predetermined period, on the basis of the number of points indicating that an object is detected for the first period or longer, and the duration of points.

13. The control device according to claim 1, wherein
the first period has a length equal to the predetermined period.

14. A program executed by a control device that processes point cloud data output from a LiDAR device, the program causing the control device to execute:
a step of partitioning data indicating a space into a plurality of voxels;
a step of assigning an initial value of a variable to each of the voxels;
a step of performing, for each predetermined period, on a basis of point cloud data input from the LiDAR device, one of a variation of raising by a predetermined rising width and a variation of lowering by a predetermined falling width with respect to the variable of the voxel in which a predetermined number or more of points are located indicating that an object is detected for a first period or longer that is equal to or shorter than the predetermined period, and performing other of a variation of raising by the predetermined rising width and a variation of lowering by the predetermined falling width with respect to the variable of the voxel in which the number of points indicating that an object is detected for the first period or longer is less than the predetermined number; and
a step of outputting data in which the voxel having the variable equal to or larger than a predetermined threshold is divided from the other voxels, after the step of varying the variable is repeated a predetermined number of times.

15. A LiDAR system comprising a LiDAR device and a control device that receives point cloud data output from the LiDAR device, wherein
the control device includes:
a partition unit that partitions data indicating a space into a plurality of voxels;
an assignment unit that assigns an initial value of a variable to each of the voxels;
a variation unit that performs, for each predetermined period, on a basis of point cloud data input from the LiDAR device, one of a variation of raising by a predetermined rising width and a variation of lowering by a predetermined falling width with respect to the variable of the voxel in which a predetermined number or more of points are located indicating that an object is detected for a first period or longer that is equal to or shorter than the predetermined period and performs other of a variation of raising by the predetermined rising width and a variation of lowering by the predetermined falling width with respect to the variable of the voxel in which the number of points indicating that an object is detected for the first period or longer is less than the predetermined number; and
an output unit that outputs data in which the voxel having the variable equal to or larger than a predetermined threshold is divided from the other voxels, after the variation of the variable in the variation unit is repeated a predetermined number of times.
